# EUROPEAN PATENT APPLICATION

(11) **EP 4 832 154 A1**
(43) Date of publication of application: **28.10.2026**
(21) Application number: 24907967.4
(22) Date of filing: 13.12.2024
(51) Int. Cl.: H01M 10/54, B02C 19/18, C22B 7/00

(54) **BATTERY SHREDDED MATERIAL AND BATTERY PROCESSING METHOD**

(30) Priority: 18.12.2023 KR 20230185014
(71) Applicant: POSCO Holdings Inc., Pohang-si, Gyeongsangbuk-do 37859 (KR)
(72) Inventor: LEE, Juseung, Pohang-si, Gyeongsangbuk-do 37859 (KR); PARK, Joongkil, Pohang-si, Gyeongsangbuk-do 37859 (KR); PARK, Chonglyuck, Pohang-si, Gyeongsangbuk-do 37859 (KR); KIM, Wanyi, Pohang-si, Gyeongsangbuk-do 37859 (KR); HAN, Sangwoo, Pohang-si, Gyeongsangbuk-do 37859 (KR); PARK, Junyong, Pohang-si, Gyeongsangbuk-do 37859 (KR)
(74) Representative: Pfenning, Meinig & Partner mbB
(86) International application number: PCT/KR2024/020321
(87) International publication number: WO 2025/135683

(57) **Abstract**

The present invention relates to a battery shredded material and a battery treatment method, and provides a battery shredded material for recovering valuable metals from a waste battery, wherein the battery shredded material has a layered structure including a separator on at least one surface of which a positive electrode and a negative electrode are stacked, and wherein a content of copper (Cu) in the negative electrode is 0.01 wt% to 2.5 wt% based on 100 wt% of the negative electrode.

## Description

### [TECHNICAL FIELD]

The present invention relates to a waste battery, and more particularly, to a battery shredded material extracted from recycling of a waste battery and a battery treatment method.

### [BACKGROUND ART]

As demand for electric vehicles has become active worldwide, the issue of treatment of waste batteries generated from the electric vehicles has emerged as a social issue. In the case of lithium secondary batteries, which are main raw materials of the waste batteries, organic solvents, explosive materials, and heavy metal materials such as Ni, Co, Mn, and Fe are contained therein. However, since Ni, Co, Mn, and Li have high scarcity value as valuable metals, recovery and recycling processes after disposal of lithium secondary batteries are emerging as an important research field.

Specifically, a lithium secondary battery mainly includes copper and aluminum used as current collectors, Li-, Ni-, Co-, and Mn-containing oxides constituting a positive electrode material, and graphite used as a negative electrode material, and includes a separator separating the positive electrode material and the negative electrode material and an electrolyte solution injected into the separator. As a solvent and a salt constituting the electrolyte solution, carbonate organic materials such as ethylene carbonate and propylene carbonate are mainly mixed and used, and LiPF₆ is used as a representative salt.

In order to utilize the waste battery, development of a waste battery recycling process has been actively conducted, in which a front-end process of pulverizing the waste battery to generate an intermediate material such as a waste battery shredded material or black powder is performed, and then valuable metals are recovered through a back-end process.

In the process of treating the waste battery, pretreatment for minimizing a chemical energy reaction is very important in order to safely shred the waste battery. As the pretreatment, various methods such as brine discharge, electrical discharge, and freezing treatment are used. The brine discharge is a representative wet treatment method, and the electrical discharge and the freezing treatment method are representative dry treatment methods.

The brine discharge has a problem in that a large amount of impurities is included compared with a dry treatment method. In order to reduce introduction of the impurities, a dry treatment method is advantageous. However, among the dry treatment methods, in the case of electrical discharge, when deep discharging for making the battery inert while discharging the battery to 0 V is performed for safe battery treatment, discharge continues even after all lithium is removed from graphite, and copper foil, which is a negative electrode current collector, is oxidized, thereby causing a problem in that copper ions are released into the electrolyte solution.

In addition, a case occurs in which the copper ions penetrate through the separator and are deposited on a surface of the positive electrode material. In addition, when the shredded material in such a state is introduced into a downstream process, the content of copper impurities increases, and thus a problem may occur in the recovery rate of valuable metals in the downstream process.

### [DETAILED DESCRIPTION OF THE INVENTION]

### [Technical Problem]

A technical problem to be solved by the present invention is to provide a battery shredded material capable of improving valuable metal recovery efficiency in a downstream process by minimizing copper impurities leaking from a battery active material in battery pretreatment.

Another technical problem to be solved by the present invention is to provide a battery treatment method for providing a battery shredded material having the above-described advantages.

### [Technical Solution]

A battery shredded material according to one embodiment of the present invention is a battery shredded material for recovering valuable metals from a waste battery, and may have a layered structure including a separator on at least one surface of which a positive electrode and a negative electrode are stacked, wherein a content of copper (Cu) in the negative electrode may be 0.01 wt% to 2.5 wt% based on 100 wt% of the negative electrode. In one embodiment, the negative electrode includes fluorine (F), and a content of fluorine (F) in the negative electrode may be 9.5 wt% to 15 wt% based on 100 wt% of the negative electrode.

In one embodiment, the battery shredded material may satisfy the following Equation 1. <Equation 1> $25 \leq \left[F\right] / \left[Cu\right] \leq 250$

In Equation 1, [F] and [Cu] mean contents of fluorine and copper, respectively, in the negative electrode.

In one embodiment, the battery shredded material may satisfy the following Equation 2. <Equation 2> $0.120 \leq \left(\left[F\right]+\left[Cu\right]\right) / \left[C\right] \leq 0.180$

In Equation 2, [F], [Cu], and [C] mean contents of fluorine, copper, and graphite, respectively, in the negative electrode.

In one embodiment, the battery shredded material may satisfy the following Condition 1 and Condition 2.

<Condition 1> The layered structure is a stacked structure having one or more layers and seven or fewer layers.

<Condition 2> A size of the unit battery shredded material based on a major axis, which is the longest axis among a width direction, a length direction, and a height direction, is 100 mm or less.

In one embodiment, the negative electrode includes carbon (C), and a content of carbon (C) in the negative electrode may be 71.0 wt% to 78.0 wt% based on 100 wt% of the negative electrode.

A battery treatment method according to another embodiment of the present invention includes preparing a battery having a voltage of 2.5 V or more, freezing the battery, and shredding the frozen battery into a battery shredded material, wherein a content of copper (Cu) in a negative electrode of the battery shredded material may be 0.01 wt% to 2.5 wt% based on 100 wt% of the negative electrode.

In one embodiment, the battery treatment method may satisfy the following Equation 3. <Equation 3> $y = 3.818 {e}^{- 0.886 x}$

In Equation 3, x means a voltage state [V] before battery shredding, and y means an average content (wt%) of Cu included in the negative electrode.

In one embodiment, in the battery treatment method, freezing the battery may be performed at a temperature of -20°C or lower. In one embodiment, the battery shredded material may satisfy the following Equation 1. <Equation 1> $25 \leq \left[F\right] / \left[Cu\right] \leq 250$

In Equation 1, [F] and [Cu] mean contents of fluorine and copper, respectively, in the negative electrode.

In one embodiment, the battery shredded material may satisfy the following Equation 2. <Equation 2> $0.120 \leq \left(\left[F\right]+\left[Cu\right]\right) / \left[C\right] \leq 0.180$

In Equation 2, [F], [Cu], and [C] mean contents of fluorine, copper, and graphite, respectively, in the negative electrode.

In one embodiment, shredding the battery may be performed under a condition of supplying an inert gas, carbon dioxide, nitrogen, water, or a combination thereof, or under a vacuum atmosphere condition of 100 torr or less.

### [Advantageous Effects]

The battery shredded material according to one embodiment of the present invention provides a battery shredded material capable of improving valuable metal recovery efficiency in a downstream process by controlling the content of copper in the battery shredded material to a predetermined range and minimizing copper impurities leaking from a battery active material in battery pretreatment.

The method for manufacturing a battery shredded material according to another embodiment of the present invention provides a battery shredded material capable of improving valuable metal recovery efficiency in a downstream process by controlling an initial battery voltage value and performing freeze-shredding, thereby minimizing copper impurities leaking from a battery active material in battery pretreatment.

### [BRIEF DESCRIPTION OF THE DRAWINGS]

FIG. 1 shows an SEM photograph of a surface of a negative electrode material according to one embodiment of the present invention.
FIG. 2 shows an SEM photograph of a surface of a negative electrode material according to a Comparative Example of the present invention.
FIG. 3 shows an SEM photograph of a surface of a negative electrode material according to a Comparative Example of the present invention.
FIGS. 4A to 4H are microstructure photographs for deriving component result values included in negative electrode materials according to Examples and Comparative Examples of the present invention.
FIG. 5 is a graph showing a copper content of a negative electrode material according to battery voltage conditions.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail. However, these are provided as examples, and the present invention is not limited thereto, and the present invention is only defined by the scope of the claims to be described below.

A unit battery shredded material according to one embodiment of the present invention is for recovering valuable metals from a waste battery, and has a layered structure including a separator on at least one surface of which a positive electrode and a negative electrode are stacked. Specifically, the layered structure may include a configuration in which the positive electrode and the negative electrode are included on one surface of the separator based on the separator. More specifically, the number of layers of the layered structure may correspond to the number of separators.

The layered structure may include, for example, any one of positive electrode-separator-negative electrode, separator-negative electrode, and negative electrode-separator, and, for example, positive electrode-separator-negative electrode-separator-positive electrode-separator-negative electrode may have a three-layered structure. Specifically, as at least one or more layers are stacked, the unit battery shredded material may have a predetermined thickness in the thickness direction.

In one embodiment, the unit battery shredded material may satisfy the following Condition 1.

<Condition 1> The layered structure may be a stacked structure having one or more layers and seven or fewer layers.

The unit battery shredded material may have a layered structure having a stacked structure of one or more layers and seven or fewer layers. Specifically, the layered structure may be a stacked structure having one or more layers and five or fewer layers. As the layered structure is stacked within the above range, a temperature rise amount of the shredded material can be minimized, and a temperature-rising time can be appropriately required. When the layered structure is stacked thicker than the upper limit of the above range, there is a problem in that the temperature rise amount excessively increases and the temperature-rising time also increases, thereby causing combustion and fire.

In one embodiment, the unit battery shredded material may satisfy the following Condition 2.

<Condition 2> A size of the unit battery shredded material may be 100 mm or less based on a major axis, which is the longest axis among a width direction, a length direction, and a height direction.

In one embodiment, the unit battery shredded material may have a size of 100 mm or less based on the major axis. Specifically, the size of the unit battery shredded material may be 50 mm or less. When the size of the unit battery shredded material is excessively large, there is a problem in that the temperature of the battery shredded material itself rises to 100°C or higher, and thus a fire is highly likely to occur.

In one embodiment, the content of copper (Cu) in the negative electrode may be 0.01 wt% to 2.5 wt% based on 100 wt% of the negative electrode. Specifically, the content of copper may be 0.01 wt% to 0.42 wt%, more specifically 0.04 wt% to 0.34 wt%, and still more specifically 0.11 wt% to 0.34 wt%. When the content of copper is outside the upper limit of the above-described range, there is a problem in that an extraction recovery rate of valuable metals is reduced due to Cu impurities in a raw material introduced into a downstream process.

In one embodiment, the content of fluorine (F) in the negative electrode may be 9.5 wt% to 15.0 wt% based on 100 wt% of the negative electrode. Specifically, the content of fluorine may be 9.55 wt% to 12.5 wt%, and more specifically 9.55 wt% to 11.71 wt%.

As the content of fluorine satisfies the above-described range, a lithium compound such as lithium fluoride is appropriately formed in the negative electrode, and the lithium compound can be easily separated in a post-process, thereby increasing a recovery rate of lithium. When the content of fluorine is outside the lower limit of the above-described range, there is a problem in that, when the battery shredded material is water-leached, a recovery rate of valuable metals is reduced.

In one embodiment, the content of carbon (C) in the negative electrode may be 71.0 wt% to 78.0 wt% based on 100 wt% of the negative electrode. Specifically, the content of carbon may be 73.0 wt% to 78.0 wt%, and more specifically 73.89 wt% to 77.67 wt%. As the content of carbon satisfies the above-described range, the negative electrode can be easily separated in a post-process, and thus the recovery rate of valuable metals can be increased.

In one embodiment, the battery shredded material may satisfy the following Equation 1. <Equation 1> $25 \leq \left[F\right] / \left[Cu\right] \leq 250$

In Equation 1, [F] and [Cu] mean contents of fluorine and copper, respectively, in the negative electrode.

Equation 1 means a ratio of the content of fluorine to copper in the negative electrode, and may be an index of copper contamination. Equation 1 may satisfy 25 to 250, specifically 30 to 240, and more specifically 31.97 to 238.75.

As Equation 1 satisfies the above-described range, lithium fluoride is appropriately included in the negative electrode among the battery shredded material, and thus lithium fluoride can be easily separated from the negative electrode by water leaching in a post-process, thereby increasing a recovery rate of lithium. When Equation 1 is outside the upper limit or lower limit of the above-described range, fluorine and copper cannot be formed in a compound form separable in a post-process, thereby causing a problem of reducing the recovery rate of valuable metals.

In one embodiment, the battery shredded material may satisfy the following Equation 2. <Equation 2> $0.120 \leq \left(\left[F\right]+\left[Cu\right]\right) / \left[C\right] \leq 0.180$

In Equation 2, [F], [Cu], and [C] mean contents of fluorine, copper, and graphite, respectively, in the negative electrode.

Equation 2 means a ratio of the total amount of copper and fluorine to carbon in the negative electrode, and may be an index of copper contamination and whether discharge has been performed. Equation 2 may satisfy 0.120 to 0.180, specifically 0.122 to 0.160, and more specifically 0.124 to 0.158. As Equation 2 satisfies the above-described range, copper impurities leaking from the battery active material can be minimized, thereby improving valuable metal recovery efficiency in a downstream process. When Equation 2 is outside the above-described range, when the battery shredded material is introduced into a downstream process, the content of copper impurities is high, thereby causing a problem in that the valuable metal recovery efficiency is reduced.

A battery treatment method according to still another embodiment of the present invention includes preparing a battery, freezing the battery, and shredding the frozen battery. The battery treatment method may be a method for treating various types of batteries including lithium ions, and the battery may be, for example, a lithium secondary battery separated from a vehicle, a secondary battery separated from an electronic device such as a mobile phone, a camera, or a laptop computer, specifically a lithium secondary battery.

In one embodiment, in the step of preparing the battery, the battery may have a voltage of 2.5 V or more. The battery of the present invention may have a voltage of 2.5 V to 4.5 V. Specifically, the voltage may be 2.5 V to 4.0 V, and more specifically 3.0 V to 4.0 V.

In one embodiment, in the step of preparing the battery, the method may include electrically discharging the battery so that the battery has a voltage of 2.5 V or more. The step of electrically discharging may mean lowering a voltage of the battery by applying a current to the battery. Through the step of electrically discharging, the battery may be controlled to have a voltage of 2.5 V or more.

In the step of preparing the battery, the voltage of the battery may be measured based on a cell in the battery. Specifically, the step of measuring the voltage may measure the voltage of the cell by contacting terminals with a positive electrode and a negative electrode of the battery using a general tester. The step of measuring the voltage of the battery may be a step of determining a state of the battery in order to freeze the battery.

The step of freezing the battery is performed at a temperature sufficient to freeze an electrolyte included in the battery. Specifically, the freezing step may be performed, for example, at a temperature of -20°C or lower. Specifically, the temperature may be in a range of -150°C to - 20°C, more specifically -150°C to -50°C, and still more specifically -80°C to -60°C.

When the battery is frozen in the above temperature range, a voltage minutely remaining inside the battery, for example, a voltage of about 2 V to 3 V, decreases close to 0 V. Accordingly, even when a short circuit occurs in which a positive electrode and a negative electrode directly contact each other, a battery reaction does not occur, and thus the battery temperature does not increase, and gas generation and combustion of the electrolyte do not occur. In addition, since the electrolyte is in a frozen state or in a state in which vaporization is suppressed, mobility of lithium ions is very low, and conduction characteristics due to the movement of the lithium ions can be remarkably reduced, and since vaporization of the electrolyte solution does not occur, flammable gases of ethylene, propylene, and hydrogen may not be generated.

When the freezing process is outside the above temperature range, for example, when cooling is performed at a temperature higher than -60°C, the voltage remaining inside the battery does not decrease to 0 V, and a battery reaction due to a short circuit may occur, and the electrolyte is not completely frozen, which is not appropriate. In addition, when cooling is performed to - 150°C, the electrolyte is sufficiently frozen and the voltage inside the battery also decreases to 0 V, and thus it is unnecessary to lower the temperature below this. As described above, the battery treatment method includes freezing a battery such as a lithium secondary battery before shredding the battery, thereby having an advantage of preventing a risk of fire that may occur in the battery shredding process.

The step of shredding the frozen battery may mean a process of applying impact or pressure to the battery so that a portion of the battery is separated from the battery. In one embodiment, the step of shredding the battery may mean all of a process of pulverizing the battery, a process of cutting the battery, a process of compressing the battery, and a combination thereof. Specifically, the shredding step may include all processes capable of destroying the battery to obtain shredded pieces having a small size.

In one embodiment, the step of shredding the battery may include all processes of compressing the frozen battery or destroying the battery by applying external force such as shear force or tensile force. The step of shredding the battery may be performed, for example, using a shredder.

In one embodiment, the step of shredding the battery may be performed at least once or more. Specifically, the shredding step may be performed continuously or discontinuously at least once or more.

In one embodiment, the step of shredding the battery may be performed under a condition of supplying an inert gas, carbon dioxide, nitrogen, water, or a combination thereof, or under a vacuum atmosphere condition of 100 torr or less. For example, when the process of freezing the battery is performed by cooling at a temperature range of -60°C to -20°C, if the process is performed under the above-described conditions, oxygen supply can be suppressed, whereby an electrolyte can be prevented from reacting with oxygen, explosion caused thereby can be prevented, and vaporization of the electrolyte solution can be suppressed, so that flammable gases such as ethylene, propylene, or hydrogen may not be generated.

In one embodiment, at least one or more of the unit battery shredded materials included in the battery shredded material may satisfy the following Condition 1.

### <Condition 1>

The layered structure may have one or more layers and seven or fewer layers.

Condition 1 may mean that the layered structure of the unit battery shredded material including a separator on at least one surface of which the positive electrode or the negative electrode is stacked is controlled in the shredding step to be a stacked structure having one or more layers and seven or fewer layers.

In one embodiment, the layered structure may be a stacked structure having one or more layers and seven or fewer layers. Specifically, the layered structure may be a stacked structure having one or more layers and five or fewer layers. As the layered structure is stacked within the above range, a temperature rise amount of the shredded material can be minimized, and a temperature-rising time can be appropriately required. When the layered structure is stacked thicker than the upper limit of the above range, there is a problem in that the temperature rise amount excessively increases and the temperature-rising time also increases, thereby causing combustion.

In one embodiment, at least one or more of the unit battery shredded materials included in the battery shredded material may satisfy the following Condition 2.

### <Condition 2>

A size of the unit battery shredded material based on a major axis, which is the longest axis among a width direction, a length direction, and a height direction, may be 100 mm or less.

In one embodiment, the size of the unit battery shredded material, specifically, the size based on the major axis, which is the longest axis among the width direction, the length direction, and the height direction, may be controlled in the shredding step to be 100 mm or less, specifically 50 mm or less. When the maximum size of the battery shredded material is greater than 100 mm, a heat generation temperature occurring due to instability as the battery shredded material is shredded rises to a temperature region of 120°C, which is an average vaporization temperature of the electrolyte solution, thereby causing a problem in safety such as fire occurrence.

In one embodiment, the battery shredded material may satisfy the following Condition 3.

### <Condition 3>

A tap density of the shredded battery material is 200 kg/m³ to 600 kg/m³.

The tap density generally means an apparent density obtained by mechanically tapping a measuring container containing a powder sample. Specifically, in order to identify tap density characteristics of the lithium ion battery shredded material, a commercial battery module having a weight of 30 kg and composed of about 30 cells was shredded using a crusher, placed in a case manufactured for stabilization of the shredded material (volume: width 0.4 m × length 0.7 m × height 0.44 m), and mechanically tapped to measure an apparent density. More specifically, density (ρ=M/V) was calculated by dividing the battery weight (M, kg) by the case volume (V, m³). The tap density of the unit battery shredded material calculated by the above-described method is 200 kg/m³ to 600 kg/m³. Specifically, the tap density may be 200 kg/m³ to 300 kg/m³.

When the tap density is outside the upper limit, there is a risk of fire because heat is instantaneously generated by disconnection of shredded pieces that are densely stacked, and there is a problem in that stabilization treatment capacity is reduced because a space through which the electrolyte can escape to the outside becomes narrow. When the tap density is outside the lower limit, there is a problem in that a large number of gaps are formed between shredded pieces and occupy a large volume, and an additional pressing process is required to transfer the shredded pieces to a post-process.

Hereinafter, preferred Examples and Comparative Examples of the present invention will be described. However, the following Examples are merely preferred embodiments of the present invention, and the present invention is not limited by the following Examples.

### <Experimental Example 1> - Component Analysis of Negative Electrode Surface

### <Example> - Freeze-Shredding at Voltage of 3 V or More

A waste battery having a voltage of 3 V or more was prepared and freeze-shredding was performed. At this time, in order to prepare the waste battery having a voltage of 3 V or more, the SOC was controlled to 0% or more by electrical discharge, and the freeze-shredding was performed under a condition of -70°C. Through the freeze-shredding, a battery shredded material in which respective members were sequentially stacked, such as positive electrode-separator-negative electrode, was obtained.

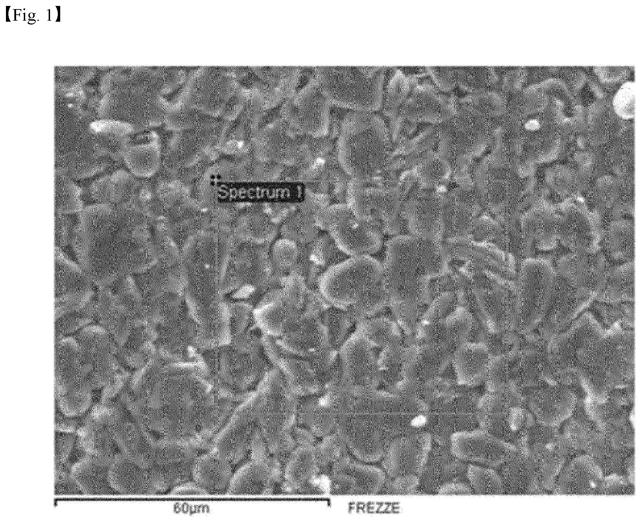

FIG. 1 shows an SEM photograph of a surface of a negative electrode material according to one embodiment of the present invention.

Referring to FIG. 1, it can be confirmed that, in Example 1, Cu contamination on the carbon surface of the negative electrode material was not observed.

### <Comparative Example 1> - 0 V Discharge

A waste battery was prepared, and forced discharge was performed by electrical discharge so that the voltage of the battery became 0 V. Thereafter, the discharged battery was shredded at room temperature to obtain a battery shredded material.

### <Comparative Example 2> - -0.4 V Discharge (Overdischarge)

A waste battery was prepared, and overdischarge was performed by electrical discharge so that the voltage of the battery became -0.4 V. Thereafter, the discharged battery was shredded at room temperature to obtain a battery shredded material.

### <Comparative Example 3> - -0.8 V Discharge (Overdischarge)

A waste battery was prepared, and overdischarge was performed by electrical discharge so that the voltage of the battery became -0.8 V. Thereafter, the discharged battery was shredded at room temperature to obtain a battery shredded material.

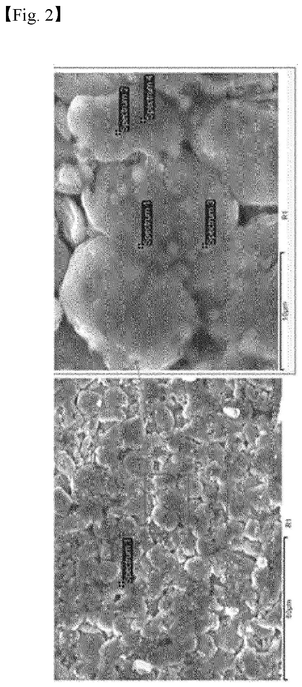

FIG. 2 shows an SEM photograph of a surface of a negative electrode material according to a Comparative Example of the present invention.

FIG. 2 is an SEM photograph of a surface of a negative electrode material when forced discharge is performed as in Comparative Example 1 of the present invention. In FIG. 2, it can be confirmed that, compared with FIG. 1, an area of a white region, which is a copper-contaminated region, is large.

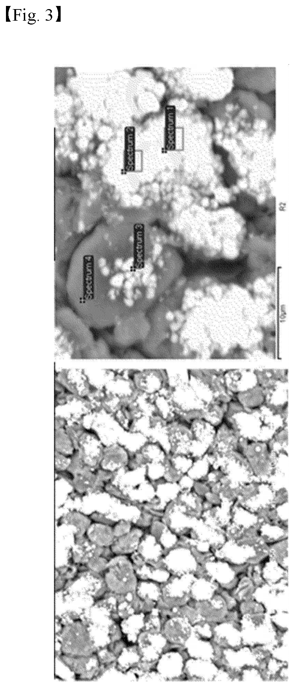

FIG. 3 shows an SEM photograph of a surface of a negative electrode material according to a Comparative Example of the present invention.

In FIG. 3, it was confirmed that, when overdischarge was performed as in Comparative Example 3 of the present invention, copper contamination was more severe than in Comparative Example 1. Specifically, it can be confirmed that, compared with FIGS. 1 and 2, the battery shredded material on which overdischarge was performed has a larger area of a white region, which is a copper-contaminated region.

Table 1 below shows component result values included in the negative electrode material in the negative electrode among the battery shredded material according to battery voltage conditions. The component result values included in the negative electrode material were measured by the following method.

Component result values included in negative electrode material: Types and contents of chemical components of a microstructure were measured using X-ray energy emitted by irradiating an electron beam using an SEM-EDX detector.

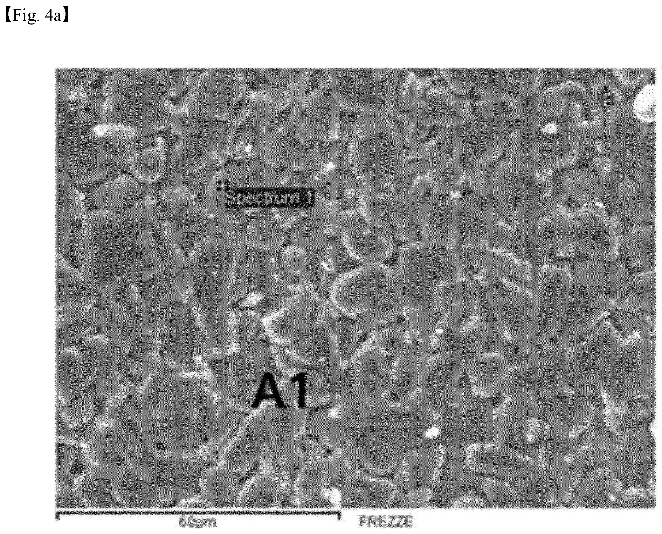

FIGS. 4A to 4H are microstructure photographs for deriving component result values included in negative electrode materials according to Examples and Comparative Examples of the present invention.

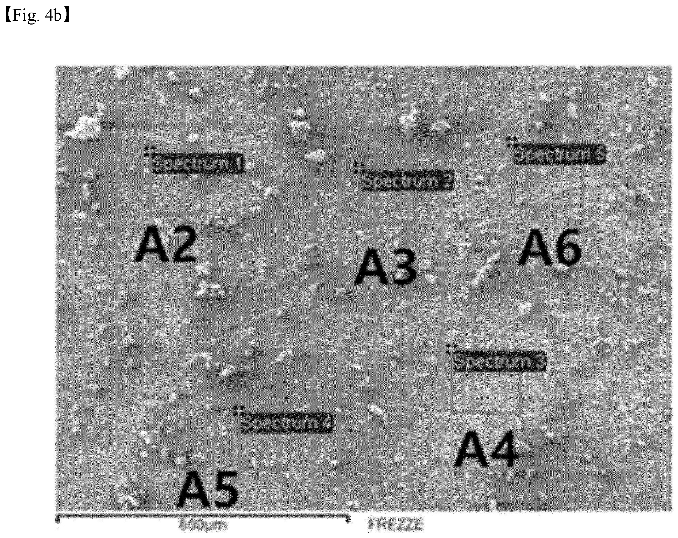

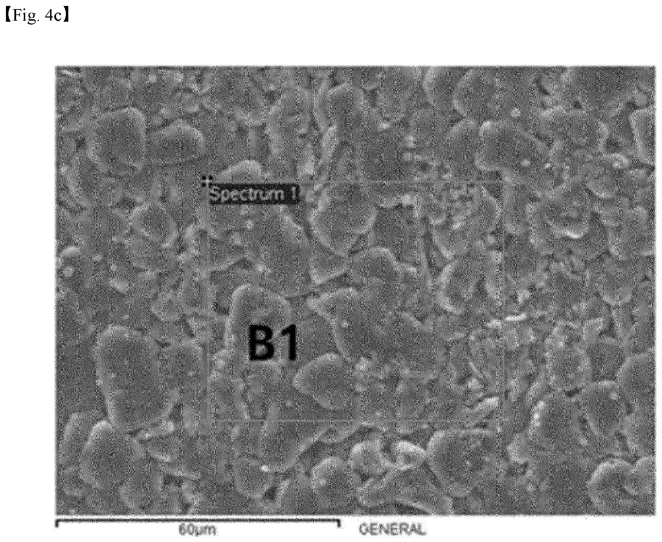

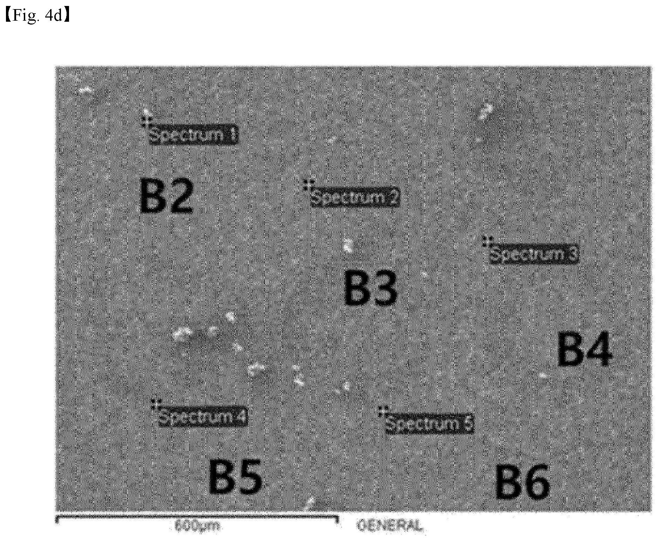

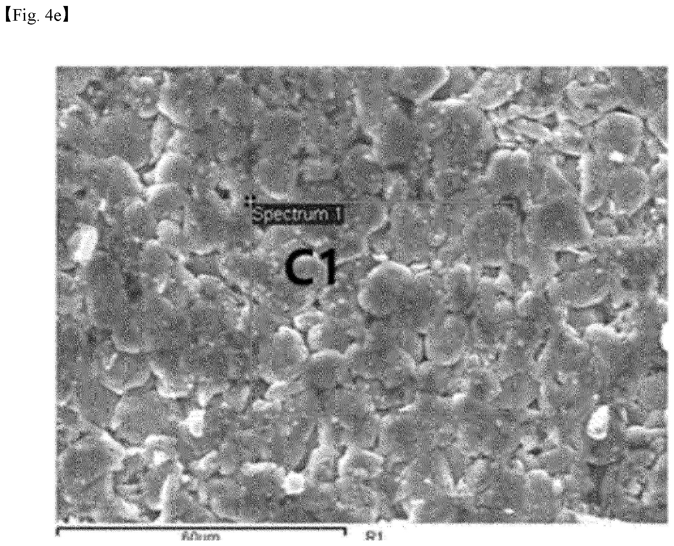

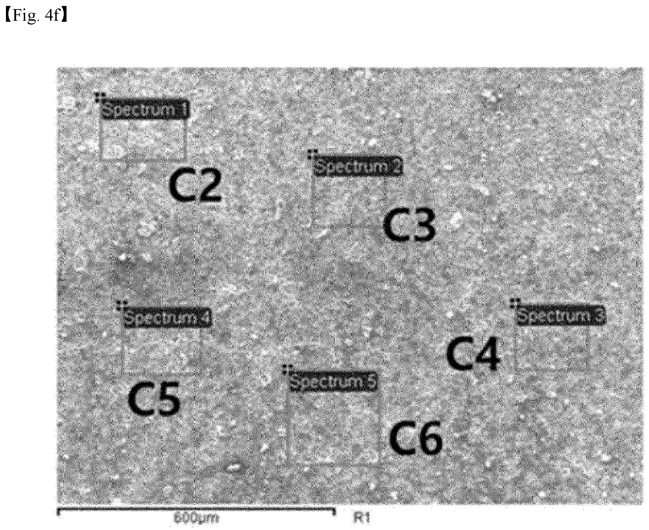

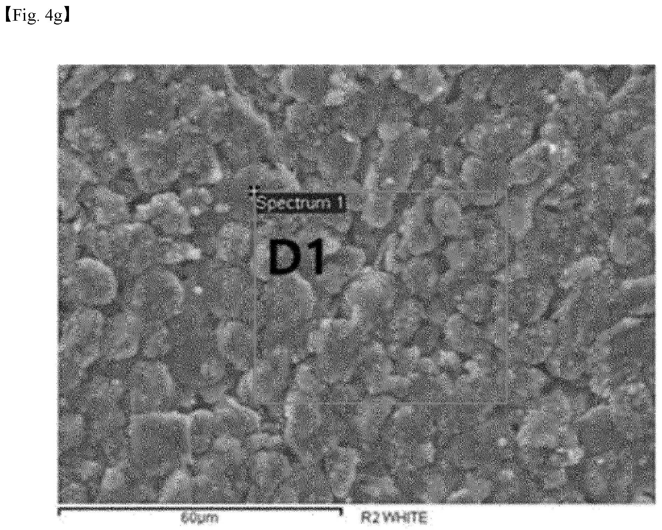

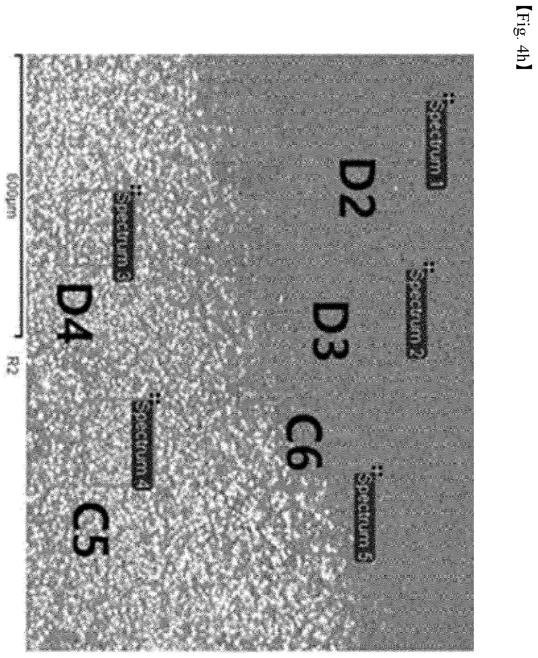

FIGS. 4A and 4B show microstructures of a negative electrode material according to the Example of the present invention, FIGS. 4C and 4D are microstructures of a negative electrode material according to Comparative Example 1 of the present invention, FIGS. 4E and 4F are microstructures of a negative electrode material according to Comparative Example 2 of the present invention, and FIGS. 4G and 4H are microstructures of a negative electrode material according to Comparative Example 3 of the present invention.

**[Table 1]**

| Volta ge | Indic ation | C | O | F | Al | P | S | Mn | Co | Ni | Cu | Equation 1 | Equation 2 | Re mar ks |
|---|---|---|---|---|---|---|---|---|---|---|---|---|---|---|
| 3.2 V | A1 | 77.67 | 8.88 | 10.87 | 0.39 | 1.42 | 0 | 0.17 | 0.06 | 0.18 | 0.34 | 31.97 | 0.144 | Exa mpl e 1 |
| | A2 | 77.1 | 10.5 | 9.55 | 0.32 | 1.51 | 0.38 | 0.28 | - | 0.31 | 0.04 | 238.75 | 0.124 | |
| | A3 | 74.94 | 10.23 | 11.1 | 0.12 | 1.7 | 0.37 | 0.31 | 0.18 | 0.94 | 0.11 | 100.91 | 0.150 | |
| | A4 | 74.55 | 10.82 | 11.44 | 0.47 | 1.62 | 0.41 | 0.08 | - | 0.28 | 0.33 | 34.67 | 0.158 | |
| | A5 | 73.89 | 11.71 | 11.09 | 0.16 | 1.6 | 0.35 | 0.26 | 0.07 | 0.65 | 0.22 | 50.41 | 0.153 | |
| | A6 | 76.39 | 10.09 | 10.79 | 0.48 | 1.58 | - | - | 0.02 | 0.33 | 0.33 | 32.70 | 0.146 | |
| 0 v | B1 | 80.17 | 8.46 | 4.32 | 0.73 | 0.84 | 1.32 | 0 | 0 | 0.33 | 3.83 | 1.13 | 0.102 | Co mpa rativ e Exa mpl e 1 |
| | B2 | 80.19 | 8.45 | 4.55 | 0.37 | 0.88 | 1.51 | - | - | - | 4.05 | 1.12 | 0.107 | |
| | B3 | 80.49 | 8.64 | 4.28 | 0.22 | 0.87 | 1.44 | 0.08 | - | - | 3.99 | 1.07 | 0.103 | |
| | B4 | 79.24 | 10.37 | 3.76 | 0.25 | 0.75 | 1.47 | - | 0.21 | 0.16 | 3.79 | 0.99 | 0.095 | |
| | B5 | 79.96 | 8.6 | 4.14 | 0.51 | 0.89 | 1.34 | 0.27 | - | - | 4.29 | 0.97 | 0.105 | |
| | B6 | 78.92 | 10.21 | 4.19 | 0.34 | 0.93 | 1.23 | 0.12 | - | 0.23 | 3.84 | 1.09 | 0.102 | |
| -0.4 V | C1 | 79.28 | 8.49 | 4.72 | 1.26 | 0 | 1.51 | 0 | 0.11 | 0.21 | 4.44 | 1.06 | 0.116 | Co mpa rativ e Exa mpl e 2 |
| | C2 | 78.48 | 9.52 | 5.15 | 0.07 | 0.98 | 1.56 | 0.2 | 0.03 | 0.04 | 3.98 | 1.29 | 0.116 | |
| | C3 | 78.08 | 9.6 | 5.05 | 0.24 | 1.31 | 1.55 | - | 0.07 | 0.39 | 3.7 | 1.36 | 0.112 | |
| | C4 | 78.1 | 8.29 | 5.78 | - | 1.2 | 1.71 | - | 0.19 | 0.58 | 4.17 | 1.39 | 0.127 | |
| | C5 | 77.23 | 9.35 | 5.32 | 0.14 | 1.16 | 1.57 | 0.11 | - | 0.79 | 4.34 | 1.23 | 0.125 | |
| | C6 | 76.42 | 10.03 | 5.39 | 0.06 | 1.14 | 1.75 | 0.35 | 0.3 | 0.41 | 4.14 | 1.30 | 0.125 | |
| -0.8 V | D1 | 52.1 | 16.46 | 11.14 | 0.05 | 4.05 | 0.75 | - | - | 0.6 | 14.85 | 0.75 | 0.499 | Co mpa rativ e Exa mpl e 3 |
| | D2 | 82.33 | 7.22 | 3.57 | 0.13 | 1.91 | 0.35 | 0.13 | 0.13 | 0.03 | 4.2 | 0.85 | 0.094 | |
| | D3 | 81.58 | 7.26 | 4.35 | 0.06 | 1.98 | 0.18 | 0.14 | - | 0 | 4.45 | 0.98 | 0.108 | |
| | D4 | 56.33 | 17.49 | 8.7 | - | 3.9 | 0.57 | 0.12 | 0.02 | 0.02 | 12.86 | 0.68 | 0.383 | |
| | D5 | 55.24 | 17.24 | 9.19 | 0.19 | 3.92 | - | 0.32 | 0.01 | 0.07 | 13.82 | 0.66 | 0.417 | |
| | D6 | 71.78 | 11.55 | 5.82 | 0.03 | 2.55 | 0.41 | 0.1 | - | - | 7.75 | 0.75 | 0.189 | |
| Equation 1: F/Cu | | | | | | | | | | | | | | |
| Equation 2: (F+Cu)/C | | | | | | | | | | | | | | |

Referring to Table 1, it was confirmed that, when electrical discharge was performed as in the Comparative Examples, the content of copper (Cu), which acts as an impurity in a downstream process, was high. This confirms that, in forcibly discharging the battery, discharge continues even after all lithium in graphite is removed, and copper foil, which is a negative electrode current collector, is oxidized, thereby causing copper ions to be released into the electrolyte solution and increasing the content of copper in the negative electrode. In contrast, it can be confirmed that, in the Example, by performing freeze-shredding without electrical discharge, the copper content in the negative electrode material was lower than those of the Comparative Examples. When examining the effects of the Example and the Comparative Examples, when a battery shredded material having a small content of copper as in the Example is introduced into a downstream process such as wet treatment, there is an advantage in that the recovery rate of valuable metals is high due to a small content of copper, which is an impurity. Specifically, as in the Example, in recycling a negative electrode material, freeze-shredding includes copper impurities, but in the case of overdischarge, copper penetrates into graphite microstructure layers, which causes a problem in that separation is difficult.

### <Experimental Example 2> - Average Copper Content According to Voltage Before Battery Shredding

Due to morphology characteristics of the negative electrode material and the positive electrode material, the Cu content of the negative electrode material can be expressed by the following Equation 3. <Equation 3> $y = 3.818 {e}^{- 0.886 x}$

In Equation 3, x means a voltage state [V] before battery shredding, and y means an average content (wt%) of Cu included in the negative electrode.

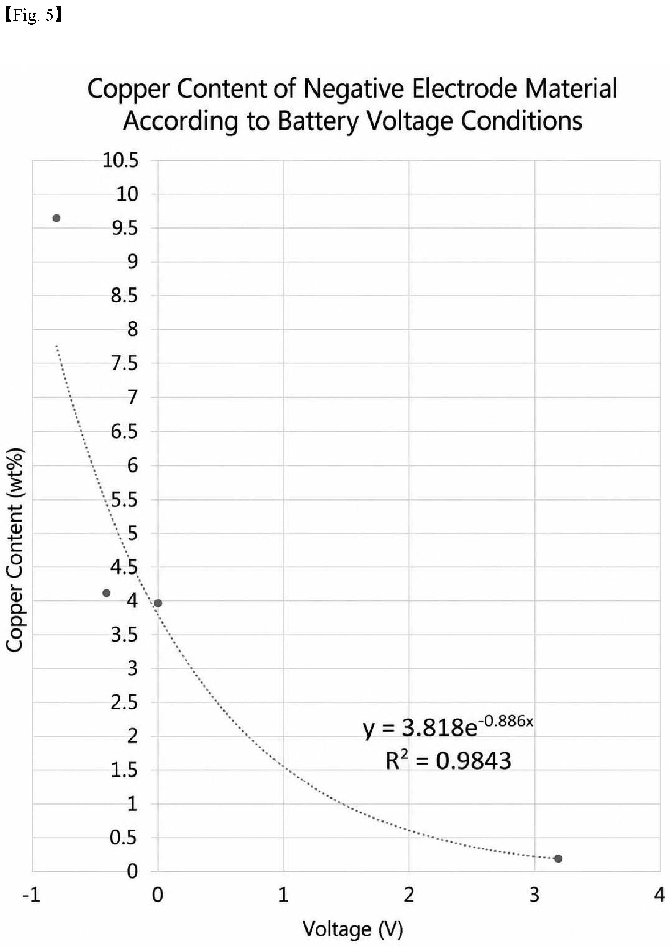

FIG. 5 is a graph showing a copper content of a negative electrode material according to battery voltage conditions.

Referring to FIG. 5, it can be confirmed that, when the battery voltage condition is 0.5 V to 1 V or more, the Cu content of the negative electrode material satisfies a range of about 1.5 wt%. It was confirmed that, when complete discharge is performed through conventional electrical discharge, the content of Cu has a range of about 3.8 wt%. Specifically, when an average value of Cu contents according to the discharge conditions and voltages in Table 1 was obtained and fitted with an exponential function, the copper content in the above-described range could be confirmed.

Although preferred embodiments have been described in detail above, the scope of rights of the present invention is not limited thereto, and various modifications and improvements made by a person having ordinary skill in the art using the basic concept defined in the following claims also fall within the scope of rights of the present invention.

## Claims

1. A battery shredded material for recovering valuable metals from a waste battery,
wherein the battery shredded material has a layered structure including a separator on at least one surface of which a positive electrode and a negative electrode are stacked, and
wherein a content of copper (Cu) in the negative electrode is 0.01 wt% to 2.5 wt% based on 100 wt% of the negative electrode.

2. The battery shredded material of claim 1,
wherein the negative electrode comprises fluorine (F), and
wherein a content of fluorine (F) in the negative electrode is 9.5 wt% to 15 wt% based on 100 wt% of the negative electrode.

3. The battery shredded material of claim 1,
wherein the battery shredded material satisfies the following Equation 1: <Equation 1> $25 \leq \left[F\right] / \left[Cu\right] \leq 250$
wherein, in Equation 1, [F] and [Cu] mean contents of fluorine and copper, respectively, in the negative electrode.

4. The battery shredded material of claim 1,
wherein the battery shredded material satisfies the following Equation 2: <Equation 2> $0.120 \leq \left(\left[F\right]+\left[Cu\right]\right) / \left[C\right] \leq 0.180$
wherein, in Equation 2, [F], [Cu], and [C] mean contents of fluorine, copper, and graphite, respectively, in the negative electrode.

5. The battery shredded material of claim 1,
wherein the battery shredded material comprises at least one unit battery shredded material satisfying at least one of the following Condition 1 and Condition 2:
<Condition 1> the layered structure is a stacked structure having one or more layers and seven or fewer layers; and
<Condition 2> a size of the unit battery shredded material based on a major axis, which is the longest axis among a width direction, a length direction, and a height direction, is 100 mm or less.

6. The battery shredded material of claim 1,
wherein the negative electrode comprises carbon (C), and
wherein a content of carbon (C) in the negative electrode is 71.0 wt% to 78.0 wt% based on 100 wt% of the negative electrode.

7. A battery treatment method, comprising:
preparing a battery having a voltage of 2.5 V or more;
freezing the battery; and
shredding the frozen battery into a battery shredded material,
wherein a content of copper (Cu) in a negative electrode of the battery shredded material is 0.01 wt% to 2.5 wt% based on 100 wt% of the negative electrode.

8. The battery treatment method of claim 7,
wherein the battery treatment method satisfies the following Equation 3: <Equation 3> $y = 3.818 {e}^{- 0.886 x}$
wherein, in Equation 3, x means a voltage state [V] before battery shredding, and y means an average content (wt%) of Cu included in the negative electrode.

9. The battery treatment method of claim 7,
wherein freezing the battery is performed at a temperature of -20°C or lower.

10. The battery treatment method of claim 7,
wherein the battery shredded material satisfies the following Equation 1: <Equation 1> $25 \leq \left[F\right] / \left[Cu\right] \leq 250$
wherein, in Equation 1, [F] and [Cu] mean contents of fluorine and copper, respectively, in the negative electrode.

11. The battery treatment method of claim 7,
wherein the battery shredded material satisfies the following Equation 2: <Equation 2> $0.120 \leq \left(\left[F\right]+\left[Cu\right]\right) / \left[C\right] \leq 0.180$
wherein, in Equation 2, [F], [Cu], and [C] mean contents of fluorine, copper, and graphite, respectively, in the negative electrode.

12. The battery treatment method of claim 7,
wherein shredding the battery is performed under a condition of supplying an inert gas, carbon dioxide, nitrogen, water, or a combination thereof, or under a vacuum atmosphere condition of 100 torr or less.
